Europäisches Patentamt

European Patent Office

Office européen des brevets

(11) Publication number: **0 139 530**
**A2**

# EUROPEAN PATENT APPLICATION

(21) Application number: **84307193.7**

(22) Date of filing: **18.10.84**

(51) Int. Cl.⁴: **B 27 N 3/12**
**C 08 L 97/02, C 08 G 18/00**
**C 08 G 18/76**

(30) Priority: **19.10.83 US 543573**

(43) Date of publication of application:
**02.05.85 Bulletin 85/18**

(84) Designated Contracting States:
**BE DE FR GB IT NL SE**

(71) Applicant: **ATLANTIC RICHFIELD COMPANY**
**515 South Flower Street**
**Los Angeles California 90071(US)**

(72) Inventor: **Nguyen, Tinh**
**201 Sportsman Way**
**Gaithersburg, MD 20878(US)**

(72) Inventor: **Gaul James M.**
**224 Autumn Drive**
**Exton, PA 19341(US)**

(74) Representative: **Cropp, John Anthony David et al,**
**MATHYS & SQUIRE 10 Fleet Street**
**London, EC4Y 1AY(GB)**

(54) **Preparation of lignocellulosic composite articles.**

(57) In the compression molding of lignocellulosic composite articles, such as particle or flake board, in which polyisocyanate binder systems are employed, a mineral acid is incorporated directly with the lignocellulose or in the polyisocyanate binder prior to molding to provide exceptional dimensional stability at substantially reduced isocyanate binder levels.

EP 0 139 530 A2

PREPARATION OF LIGNOCELLULOSIC COMPOSITE ARTICLES

FIELD OF THE INVENTION

The present invention relates generally to the compression molding of lignocellulosic materials into composite bodies, sheets and the like, and more particularly to an improved method for the preparation of particle board with an organic di- or polyisocyanate based binder system wherein a mineral acid is employed directly on the lignocellulosic material or incorporated into the di- or polyisocyanate to provide a molded product with superior dimensional stability at low use levels of isocyanate application.

BACKGROUND OF THE INVENTION

The molding of lignocellulosic and lignocellulosic-containing fibers, particles or layers to form composite articles is known. The binders which normally are used are the synthetic resin glues such as a solution of ureaformaldehyde resin or phenol-formaldehyde resin in water Composite products containing ligno-cellulose produced in this manner lack durability and are susceptible to moisture conditions and deterioration in certain building purposes to which they may be subjected.

Di- and polyisocyanates as binders for ligno-cellulose materials have been known for some time and give to particle board products an increased stability and mechanical strength; see, for example United States Patent No. 3,428,592; 3,440,189; 3,557,263; 3,636,199; 3,870,665; 3,919,017 and 3,930,110. It is also known in the art that the isocyanate binders are mixed with the wood particles utilized as the base for the particle board. A wood chip or particle and isocyanate binder mixture is then formed into a mat and molded with pressure and temperature to the desired size or shape. Water emulsion polyisocyanate binder systems for use with lignocellulosic particles are also known. Because the di- and polyisocyanates are much more expensive to use than the phenol or urea formaldehyde binders for particle board, the isocyanates must be employed in lesser amounts in order to be competitive. A principal disadvantage of using low levels of the isocyanates is the production of particle board with undesirable thickness swelling and linear expansion properties. In commercial particle board production whether with a phenol or urea formaldehyde binder or an isocyanate binder, a certain amount of waxes are added to aid in retarding water uptake and thickness swelling. Such treatment, however, is only effective for short periods of time. When soaking is prolonged or the board is in contact with hot water, wax treatment to reduce thickness swelling and water uptake is no longer effective.

The present invention which relates to an improved process for the preparation of lignocellulosic composite articles, especially particle board, employing an isocyanate based binder system, comprises contacting the lignocellulosic particles with a mineral acid. The contacting may be by spraying prior to addition of the binder or the mineral acid may be added along with the isocyanate binder. Such method overcomes the above-mentioned disadvantages and produces a particle board with exceptionally high dimensional stability at low levels of isocyanate application.

## SUMMARY OF THE INVENTION

This invention relates to the preparation of lignocellulosic composite articles or sheets having superior dimensional stability and strength which comprises shaping in a mold or between mold surfaces a mixture of lignocellulosic particles and a polyisocyanate based binding agent, the lignocellulosic particles having been contacted with a mineral acid, such as nitric acid, either directly or along with the polyisocyanate based binder.

It is an object of this invention to provide an improved method for the preparation of lignocellulosic composite articles.

It is a further object to provide an improved particle board having excellent stability and strength characteristics.

An advantage of the present invention is that levels of the di- or polyisocyanate necessary to produce a cured pressed composite lignocellulosic product can be reduced while maintaining equivalent or superior composite board physical properties. The instant method reduces thickness swelling and linear expansion of particle or flake board without affecting other properties. The boards are stabilized even under severe conditions such as prolonged soaking or in hot water. Further; the addition of the inorganic mineral acid aids in providing a more complete emulsification of emulsifiable polyisocyanates when applied to the lignocellulosic particles in that manner.

0139530

DETAILED DESCRIPTION OF THE INVENTION

The present invention comprises an improved method for the preparation of lignocellulosic composite molded articles, particularly particle board, by bonding together wood chips or other lignocellulosic or organic material using heat and pressure with an organic polyisocyanate employed as the binding agent, the improvement being the incorporation of a mineral acid with the lignocellulose particles either directly, as by spraying the particles or in an admixture with the polyisocyanate binder when applied to the lignocellulosic particles prior to shaping into the desired form. The lignocellulosic material and the isocyanate based binder along with the added mineral acid of the present invention is shaped or formed into a composite body at temperatures of from about 140°C. to 220°C., preferably 160°C. to 190°C. and at pressures of from about 100 to 600 psi for a period of from 1 to 10 preferably 3 to 5 minutes.

The isocyanate binding agent will generally be an organic polyisocyanate used alone but may also be in an admixture with another type of binding agent, e.g. a synthetic resin glue, or with other materials such as alkylene carbonates, epoxides as well as lignin as described for example in U. S. Patent No. 4,359,507.

The polyisocyanate component which is used in the present invention in the binder system can be any organic polyisocyanate and include aliphatic, alicyclic and aromatic polyisocyanates that contain at least two isocyanate groups per molecule. Such polyisocyanates include the diisocyanates and higher functionality isocyanates. Mixtures of polyisocyanates may be used which for example are the mixtures of di- and higher functional polyisocyanates produced by phosgenation of aniline-formaldehyde condensate or as described in U.S. Patent Nos. 3,962,302 and 3,919,279. The organic polyisocyanates may be isocyanate-ended prepolymers made by reacting under standard known conditons, an excess of a polyisocyanate with a polyol which on a polyisocyanate to polyol basis may range from about 20:1 to 2:1 and include for example polyethylene glycol, polypropylene glycol, triethylene glycol, etc., as well as glycols or polyglycols partially esterified with carboxylic acids including polyester polyols and polyether polyols. Illustrative of organic polyisocyanates which may be employed are for example, toluene-2,4- and 2,6-diisocyanates or mixtures thereof, diphenylmethane diisocyanate, m- and p-phenylene diisocyanates or mixtures thereof, m- and p-diphenylene diisocyanates, polymethylene polyphenyl isocyanates, naphthalene-1, 5-diisocyanate, chlorophenylene diisocyanate,$\propto,\propto$-xylene diisocyanate, triphenylmethane triisocyanate, hexamethylene diisocyanate, 3,3'-ditolylene -4,4-diisocyanate, butylene 1,4-diisocyanate, octylene-1, 8-diisocyanate, 1,4-, 1,3- and 1,2-cyclohexylene diisocyanate and in general the polyisocyanates disclosed in U.S. Patent No. 3,577,358, 3,012,008 and 3,097,191. The preferred polyisocyanates are the diphenylmethane diisocyanate 2,4' and 4,4' isomers including the 2,2' isomer and the higher functional polyisocyanate and polymethylene polyphenyl isocyanate mixtures, which may contain from about 20 to 85 weight percent of the diphenylmethane diisocyanate isomers. Typical of the preferred

0139530

polyisocyanates are those sold commercially as "Rubinate-M" (Rubicon Chemicals, Inc.). In general the organic polyisocyanates will have a molecular weight in the range between about 100 and 10,000. The aqueous organic polyisocyanate or isocyanate-terminated prepolymer emulsions are generally prepared by using any of the techniques known in the art for the preparation of aqueous emulsions or dispersions prior to use of the composition as binder. In general the polyisocyanate is dispersed in water in the presence of an emulsifying or surface active agent which may be any of the emulsifying agents also known in the art including anionic and nonionic agents. Preparation of the aqueous emulsions may be carried out as described in U.S. Patent Nos. 3,996,154, 4,143,014 and 4,257,995.

Lignocellulose, according to the present invention used to prepare the lignocellulosic-containing composite articles include wood chips, wood fibers, shavings, sawdust, wood wool, cork, bark and the like products for the wood-working industry. Fibers, particles, etc. from other natural products which are lignocellulosic such as straw, flax residues, dried weeds and grasses, nut shells, hulls from cereal crops such as rice and oats and the like may be used. In addition, the lignocellulosic materials may be mixed with inorganic flakes or fibrous material such as glass fibers or wool, mica and asbestos as well as with rubber and plastic materials in particulate form. The lignocellulose may contain a moisture (water) content of up to about 25 percent by weight but preferably contains between 4 and 12 percent by weight.

0139530

The inorganic mineral acids which may be employed in the process of the invention in amounts of from about 0.1 to 5.0 preferably from 0.25 to 1.5 percent based on the weight of oven dried (0% moisture content) lignocellulosic material, are phosphoric, nitric, hydrochloric and sulfuric and may have concentrations of between 0.1 to 98 percent and preferably are employed in concentrations of between 5 and 30 percent.

In manufacturing lignocellulosic composite products for the purpose of this invention, such as particle or flake board for example, a small amount of binder (with or without lignin etc.) along with the lignocellulosic material is simply milled or mixed uniformly together. Generally, the isocyanate binding agent which may also contain the mineral acid if the acid has not been applied directly to the lignocellulosic material, is sprayed onto the lignocellulose while it is being mixed or agitated in suitable and conventional equipment. Various type mixing equipment such as an intensive-shear mixer may be employed. The binder use level according to the present invention, based on the weight of oven dried (0% moisture content) lignocellulosic material is from about 1.5 to 12 preferably 2.5 to 6.5 weight percent. The lignocellulose-adhesive binder mixture is generally sprinkled or formed in the desired proportions onto a caul plate of aluminium or steel which serves to carry the "cake" into the press to give the desired thickness of product, the plates usually having been sprayed or coated with a release agent such as the metal soaps, phenolates or certain tertiary amines and the like.

-7-

The following examples are provided to illustrate the invention in accordance with the principles of this invention, including examples of a comparative nature, but are not to be construed as limiting the invention in any way except as indicated by the appended claims.

In the examples which follow, the test results set forth are expressed as ASTM D1037 values and wherein

I.B.       is Internal Bond (psi)

T.S.       is cold water (25°C) Thickness Swell, 24 hr. immersion (%) and a 2 hour boiling (%)

L.E.       is Linear Expansion (%)

MOR       is Modulus Of Rupture (psi)

MOE       is Modulus Of Elasticity (psi x $10^5$)

PMDI       is a mixture of liquid diphenylmethane diisocyanate-polymethylene polyphenyl isocyanate having a 46.5% diphenylmethane diisocyanate content.

TDI       is toluene 2,4-diisocyanate

TPMI       is triphenylmethane triisocyanate

EXAMPLE 1 (COMPARATIVE)

580 grams of pine wood chips dried to a moisture content of 6 percent were placed in an open tumbler-mixer. During tumbling 10.9 grams of diphenylmethane diisocyanate-polymethylene polyphenylisocyanate (PMDI-2% by weight based on oven dried wood chips) mixture having a 46.5 percent diphenylmethane diisocyanate content as a binder was sprayed evenly onto the wood chips by an air pressurized system. Two new aluminium caul plates 12" x 12" x 3/16" were wiped with a cloth saturated with a silanol-terminated polydimethyl siloxane release agent. The polyisocyanate coated wood chips were then preformed in a box 10.5 inches square and 12 inches high which was supported by one of the release agent coated caul plates and pressed to form a thick mat. The box was then taken out and the second coated caul plate placed on top of the mat. The whole assembly was subjected to a temperature of 190°C., pressed to stops at a thickness of 13 mm and held for 4 1/2 minutes and the press released and the lignocellulosic board easily released from the caul plates and cut into specimens for physical testing. Test results of the composite board gave an L.E. (linear expansion) of .40 percent, 92 psi I.B. (internal bond) and a T.S. (thickness swell) of 28 percent for a 24 hour cold water immersion and 48 percent for a 2 hour boiling.

EXAMPLE 2 (COMPARATIVE)

The procedure of Example 1 was repeated except that 1 percent of powdered wax (based on oven dried wood) was mixed thoroughly with the wood chips before spraying with the PMDI binder. Test results following the ASTM D1037 procedures gave an L.E. of .44 percent, an I.B. of 95 psi and a T.S. of 17.8 percent (24 hour immersion) and 36 percent (2 hour boiling).

EXAMPLES 3 AND 4

The procedure of Example 1 was repeated except that 18 gms. and 36 gms. of 15% nitric acid (0.5 and 1 percent based on oven dried wood chips) respectively were sprayed onto the wood chip during tumbling prior to application of the PMDI binder. The binder level was maintained at 2% based on the weight of the wood. The test results are shown in Table 1 below.

### TABLE 1

| Ex No. | PMDI (%) | HNO$_3$ (%) | I.B. (psi) | T.S. (%) | | L.E. (%) |
|---|---|---|---|---|---|---|
| | | | | 24 hr.soak | 2 hr.boil | |
| 3 | 2 | 0.5 | 104 | 18.4 | 25.0 | .25 |
| 4 | 2 | 1 | 70 | 19.8 | 22.5 | .24 |

EXAMPLES 5 TO 8

The procedure of Examples 3 and 4 was repeated except that hydrochloric acid and sulfuric acid were sprayed into the wood chips at concentrations of 15% and 20% respectively and in varied percent amounts based on oven dried wood. The test results are shown in Table 2 below:

### TABLE 2

| Ex No. | PMDI (%) | Amount Acid(%) | I.B. (psi) | T.S. (%) | | L.E. (%) |
|---|---|---|---|---|---|---|
| | | | | 24 hr.soak | 2 hr.boil | |
| 5 | 2 | 0.5 HCl | 75 | 13.7 | 19.0 | .26 |
| 6 | 2 | 1.0 HCl | 61 | 8.1 | 14.5 | .14 |
| 7 | 2 | 0.5 H$_2$SO$_4$ | 93 | 14.5 | 20.5 | .25 |
| 8 | 2 | 1.0 H$_2$SO$_4$ | 78 | 9.2 | 15.0 | .16 |

EXAMPLES 9 AND 10 (COMPARATIVE)

The procedure of Example 1 was repeated except that instead of straight PMDI, 38.2 grams and 49.6 grams of a 50% water emulsion of PMDI (corresponding to 3.5 and 4.5 percent binder based on oven dry wood respectively) were sprayed onto the wood chips and it was noticed that after spraying some oily unemulsified isocyanate still remained in the spraying container in both cases. Test results of the composite board product are shown in

Table 3 below.

## TABLE 3

| Ex No. | Emulsified PMDI (%) | I.B. (psi) | MOR (psi) | MOE (psi x $10^5$) | T.S. (%) 24 hr.soak |
|--------|---------------------|------------|-----------|--------------------|--------------------|
| 9 | 3.5 | 145 | 1390 | 2.40 | 21.6 |
| 10 | 4.5 | 188 | 1550 | 2.79 | 18.2 |

## EXAMPLES 11 AND 12

The procedure of Examples 9 and 10 were repeated except that 21.8 grams of a 12.5% nitric acid and 27.3 grams of 10% nitric acid solutions were added to make 50% nitric acid aqueous emulsions of PMDI. It was observed that after spraying onto the wood chips no unemulsified oily isocyanate remained in the spraying container and that a more complete emulsification of the PMDI was achieved with the $HNO_3$ solutions. Test results of the composite board product are shown in Table 4 below.

## TABLE 4

| Ex No. | Emulsified PMDI (%) | I.B. (psi) | MOR (psi) | MOE (psi x $10^5$) | T.S. (%) 24 hr.soak |
|--------|---------------------|------------|-----------|--------------------|--------------------|
| 11 | 3.5(0.5 $HNO_3$) | 180 | 1321 | 2.49 | 15.7 |
| 12 | 4.5(0.5 $HNO_3$) | 217 | 1481 | 2.70 | 13.4 |

## EXAMPLES 13 TO 16

The procedures of Examples 1 and 3 were repeated except that instead of wood particles (chips), wood flake (1/4" - 1" long x 1/20 - 1/4" wide) was used with and without the addition of $HNO_3$ and at varying non-emulsified PMDI levels. The test results of the composite board product are shown in Table 5 on the following page.

-11-

TABLE 5

| Ex No. | PMDI (gms) | (%) | HNO$_3$ (%) | I.B. (psi) | MOR (psi) | MOE (psi x 10$^5$) | T.S. (%) 24 hr. soak | 2 hr. boil |
|---|---|---|---|---|---|---|---|---|
| 13 | 10.9 | 2.0 | 0 | 74 | 2224 | 3.44 | 26.5 | 45.8 |
| 14 | 10.9 | 2.0 | 0.5 | 70 | 2016 | 4.04 | 18.6 | 26.1 |
| 15 | 19.1 | 3.5 | 0 | 161 | 2400 | 3.50 | 17.1 | 35.5 |
| 16 | 19.1 | 3.5 | 0.5 | 130 | 2030 | 4.45 | 12.0 | 18.0 |

EXAMPLE 17 (CONTROL)

The procedure of Example 1 was repeated except that 19.1 grams of PMDI (3.5% based on the weight of oven dried wood) and two pieces of pine wood veneer of 1/8" x 10.5" x 10.5", which were coated with 10 grams of PMDI on one face of each, were used between the caul plates and the preformed mat bottom and top. The whole assembly was then subjected to the heated (190°C) press for 6 minutes. Test results of the product board showed an I.B. of 138 psi, MOR of 9372 psi, MOE of 15.01 psi x 10$^5$, a T.S. 24 hour soak of 26% and L.E. (perpendicular to the grain direction of the veneer) of .39%.

EXAMPLE 18

Example 17 was repeated except that 18 grams (0.5% percent based on oven dry wood) of 15% nitric acid was sprayed on the wood chips before PMDI application to the chips and veneer. The test results of the board product showed an I.B. of 157 psi, MOR of 7157 psi, MOE of 12.05 psi x 10$^5$, a T.S. 24 hour soak of 18.3% and L.E. (perpendicular to the grain direction of the veneer) of .23%.

Example 18 was repeated except that in addition to the spraying of $HNO_3$ onto the wood chips, the inside facing of the veneer was sprayed with 5 grams of 15% $HNO_3$ before the PMDI coating on the chips and veneer. Test results of the product board showed an I.B. of 168 psi, MOR of 8047 psi, MOE of 13.89 psi x $10^5$, a T.S. 24 hour soak of 16.0 and L.E. (perpendicular to the grain direction of the veneer) of .19%.

EXAMPLE 20

Example 3 was repeated except that 10.9 grams of toluene 2,4-diisocyanate (TDI) was employed in place of the PMDI. The binder level was maintained at 2 weight percent based on 100 parts of weight of the wood. Test results on the board product showed an I.B. of 90 psi, MOR of 1280 psi, MOE of 2.10 psi x $10^5$ and a T.S. 24 hour soak of 20.3 percent.

EXAMPLE 21

Example 3 was repeated except that 10.9 grams of triphenylmethane triisocyanate (TPMI) was employed in place of the PMDI. The binder level was 2 weight percent. Test results of the board product showed an I.B. of 87 psi, MOR of 1420 psi, MOE of 2.18 psi x $10^5$ and a T.S. 24 hour soak of 21.2 percent.

CLAIMS

1. A process for the preparation of lignocellulosic composite molded articles wherein lignocellulosic material, preferably in the form of wood chips or wood flakes, is contacted with an organic polyisocyanate-based binder composition, wherein the polyisocyanate is preferably in the form of a water emulsion, and the treated material is subsequently formed into molded articles by the application of heat and pressure, characterised in that the lignocellulosic material is contacted with an inorganic mineral acid prior to molding.

2. A process according to claim 1 wherein the lignocellulosic composite article is particle board.

3. A process according to claim 1 or claim 2 wherein the lignocellulosic composite is compressed between metal platens at a temperature of from about 140°C. to 220°C. and a pressure of from about 100 psi and 600 psi for a period of from 1 to 10 minutes.

4. A process according to claim 1, claim 2 or claim 3 wherein the mineral acid has a concentration of from 0.1 to 98 percent and preferably 5 to 30 percent and is applied in amounts of from 0.1 to 5.0 percent, and preferably 0.25 to 1.5 percent, by weight based on oven dried lignocellulosic material.

5. A process according to any one of claims 1 to 4 wherein the mineral acid is selected from hydrochloric acid, phosphoric acid, sulfuric acid and, preferably, nitric acid.

6. A process according to any one of claims 1 to 5 wherein the organic polyisocyanate is selected from toluene 2,4-diisocyanate, diphenylmethane diisocyanate and polymethylene polyphenyl polyisocyanates containing from about 20 to 85 percent by weight diphenylmethane diisocyanate.

7. A process according to any one of claims 1 to 6 wherein the lignocellulosic material is contacted directly with the mineral acid.

8. A process according to any one of claims 1 to 6 wherein the mineral acid is admixed with the polyisocyanate binder composition prior to application to the lignocellulosic material.

9. A process according to any one of claims 1 to 8 wherein the lignocellulosic material is contacted with from about 1.5 to 12 percent, and preferably from 2.5 to 6.5 percent, by weight binder composition based on oven dried lignocellulosic material.

10. A process for the preparation of particle board wherein wood particles are contacted with an organic polyisocyanate-based binder composition and the treated particles are subsequently formed into boards by the application of heat and pressure, characterised in that the wood particles are contacted with from about 0.1 to 5.0 percent by weight, based on oven dried particles, of an inorganic mineral acid prior to forming the board.